# EUROPÄISCHE PATENTSCHRIFT

(11) **EP 1 112 167 B1**
(45) Veröffentlichungstag und Bekanntmachung des Hinweises auf die Patenterteilung: **29.01.2003**
(21) Anmeldenummer: 99946121.3
(22) Anmeldetag: 03.09.1999
(51) Int. Cl.: B29C 55/16

(54) **VERFAHREN ZUR HERSTELLUNG EINER BIAXIAL ORIENTIERTEN OPAKEN FOLIE AUS EINEM GESCHÄUMTEN ORIENTIERBAREN THERMOPLASTISCHEN POLYMER**
METHOD FOR PRODUCING A BIAXIALLY ORIENTED OPAQUE FILM FROM A FOAMED ORIENTABLE THERMOPLASTIC POLYMER
PROCEDE DE PRODUCTION D'UN FILM OPAQUE A ORIENTATION BIAXIALE CONSTITUE D'UN POLYMERE THERMOPLASTIQUE ORIENTABLE MOUSSE

(30) Priorität: 08.09.1998 DE 19840991
(43) Veröffentlichungstag der Anmeldung: 04.07.2001
(73) Patentinhaber: Brückner Maschinenbau GmbH, 83313 Siegsdorf (DE)
(72) Erfinder: KURTH, Hans-Peter, D-83377 Vachendorf (DE); STOPPERKA, Klaus, D-06849 Dessau (DE); SÄNZE, Johannes, D-83346 Bergen (DE); WOLF, Martin, D-83278 Traunstein (DE)
(74) Vertreter: Flach, Dieter Dipl.-Ing
(86) Internationale Anmeldenummer: EP9906512
(87) Internationale Veröffentlichungsnummer: WO00013879

(56) Entgegenhaltungen:
- GB-A- 1 323 879
- US-A- 4 810 316

## Beschreibung

Die Erfindung betrifft ein Verfahren zur Herstellung einer neuartigen biaxial orientierten Folie aus einem geschäumten orientierbaren thermoplastischen Polymer, die im wesentlichen opak ist.

Es besteht ein Bedarf an opaken Polymerfolien, die für verschiedenartige Anwendungszwecke, u.a. auch als sogenanntes synthetisches Papier oder auch für dekorative Anwendungen und Verpackungszwecke verwendbar sind und die die verbesserten Festigkeits- und Steifigkeitseigenschaften aufweisen, wie sie für orientierte, insbesondere biaxial orientierte Polymerfolien typisch sind.

Es ist bekannt, dass die Opazität von Polymerfolien dadurch erreicht werden kann, dass man den Ausgangspolymeren feste Füllstoffe beimischt, die meist anorganischer Natur sind und für die beispielsweise feinteiliges CaCO₃ oder TiO₂ repräsentativ sind.

Es ist ferner bekannt, dass man eine Opazität von Folien auch dadurch erreichen oder verstärken kann, dass man dafür sorgt, dass in der Folie im Prozeß ihrer Herstellung fein verteilte Mikrohohlräume gebildet werden, die aufgrund der Beeinflussung der Lichtbrechung bzw. Lichtbeugung ebenfalls dazu führen, dass die Folien opak werden.

Die Herstellung von Folien aus den verschiedensten thermoplastischen Polymeren, die anorganische feste Füllstoffe enthalten, auch von derartigen biaxial gereckten Folien, ist aus dem Stand der Technik gut bekannt und bedarf keiner weiteren detaillierten Diskussion.

Zur Herstellung von Folien, deren Opazität durch Mikrohohlräume bewirkt oder verstärkt wird, wird ein Phänomen ausgenutzt, das so beschrieben werden kann, dass beim Recken einer Kunststofffolie, die mit dem Grundpolymeren unverträgliche feine Feststoffteilchen enthält, sich das Polymer von den Feststoffteilchen ablöst und Mikrohohlräume gebildet werden. Die Feststoffteilchen, die diesen Effekt hervorrufen, können auch als Kavitationsmittel bezeichnet werden und dann, wenn sie selbst von höherschmelzenden organischen Polymeren gebildet werden, die ähnliche Brechungsindices aufweisen wie das Folienpolymer, als solche optisch praktisch nicht wahrnehmbar sein.

Ein Verfahren der letztgenannten Art, bei dem als unverträglicher organischer Füllstoff Polybutylenterephthalat (PBT) verwendet wird, wird z.B. in EP 0 218 355 B1 beschrieben. Auf den Inhalt der genannten Patentschrift sowie die darin zu findenden Erläuterungen und zitierten weiteren Veröffentlichungen wird im Hinblick auf die Herstellung opaker Folien mit Mikrohohlräumen pauschal verwiesen.

Die Herstellung opaker biaxial gereckter Folien auf der Basis von Polypropylen unter Verwendung von anorganischen Füllstoffen sowie unter zusätzlicher Ausnutzung der Ausbildung von Mikrohohlräumen ist z.B. auch beschrieben in der Deutschen Patentanmeldung DE 196 04 637 der Anmelderin.

Folien, die Mikrohohlräume enthalten, weisen im Vergleich mit massiven Folien oder stark füllstoffhaltigen Folien eine niedrigere Dichte auf. Ein fehlender, oder aufgrund der teilweise durch Mikrohohlräume erzeugten Opazität verminderter, Anteil an festen anorganischen Füllstoffen ist ebenfalls ein wichtiger Vorteil. Anorganische Füllstoffe in Folien, insbesondere biaxial gereckten Folien, haben den Nachteil, dass sie zu einem hohen Verschleiß an den Maschinenteilen, die mit dem füllstoffhaltigen Kunststoff in Berührung kommen, führen. Insbesondere an Extruderschnecken bzw. an den Innenwänden der Extruder, aber auch an den Haltekluppen für die Folien beim Recken, sind nach relativ kurzer Zeit Abrasionserscheinungen festzustellen.

Die Einarbeitung von feinteiligen organischen Polymeren als Kavitationsmittel für die Bildung von Mikrohohlräumen hat den Nachteil, dass das gleichmäßige Zumischen dieser unverträglichen Polymeren zur Schmelze des Grundpolymeren schwierig ist und häufig die Produktionsgeschwindigkeit einer Folienanlage begrenzt.

Aus den genannten Gründen wäre es erwünscht, opake Folien mit mechanischen Eigenschaften, wie sie durch biaxiales Recken erzeugt werden können, zur Verfügung zu haben, bei denen die Opazität wenigstens zum überwiegenden Teil oder ausschließlich durch Mikrohohlräume in Form von Gasbläschen, die durch Schäumen erzeugt werden, hervorgerufen wird. Ferner wäre es auch wünschenswert, aus im wesentlichen bekannten Folienrezepturen, bei denen PBT oder anorganische Füllstoffe und z.B. PP verwendet werden, unter zusätzlicher Zugabe von Schäumungsmitteln Folien mit niedriger Dichte herzustellen.

Es ist an sich grundsätzlich bekannt, durch Zugabe von Gasen (z.B. Stickstoff, Kohlendioxid oder niedrig siedenden Alkanen wie Butan oder Pentan), die direkt unter Druck in die Polymerschmelze eingemischt werden, geschäumte Polymerfolien herzustellen. So wird die Herstellung von Polypropylen-Schaumfolien, bei denen das Gas für die Schaumbildung als Direktbegasung mit einem physikalischen Treibmittel in die bereits plastifizierte Schmelze im Extruder eingespritzt wird, z.B. beschrieben in "Kunststoffe 87" (1997), 5, S. 570 bis 572 sowie der in dem genannen Artikel erwähnten Literatur. Bei dem beschriebenen Verfahren wird eine Schaumfolie dadurch hergestellt, dass man eine Polypropylenschmelze, die ein Gas bzw. eine niedrig siedende Flüssigkeit als physikalisches Treibmittel enthält, mit Hilfe eines gleichsinnig drehenden Doppelschneckenextruders durch eine Ringdüse extrudiert. Bei dem beschriebenen Verfahren wird die erhaltene geschäumte Folie aus dem thermoplastischen Polymer nicht durch biaxiales Recken orientiert.

Bisherige Versuche, geschäumte Folien aus einer an sich für ein biaxiales Recken geeigneten Polymerqualität zur Verbesserung ihrer mechanischen Eigenschaften auf üblichen, stufenweise arbeitenden Anlagen für die Herstellung biaxial orientierter Folien zu recken, blieben erfolglos. In eine erste Richtung gereckte geschäumte Folien reißen beim Versuch, sie in einem nachgeschalteten Schritt in einer dazu senkrechten zweiten Richtung zu recken, parallel zur Richtung des ersten Reckens. Offensichtlich kommt es beim ersten Recken dazu, dass das Folienpolymer zwischen den Gasbläschen wenigstens lokal sehr stark orientiert wird, was dazu führt, dass die Folie eine hohe Spleißneigung zeigt und beim anschließenden Recken in einer Richtung senkrecht zur Richtung des ersten Reckens reißt.

Diese Neigung von geschäumten und monoaxial gereckten Folien, beim Recken leicht zu reißen, ist bekannt und wird in verschiedenen speziellen Verfahren zur Herstellung von offenzelligen Kunststoffolien mit stoffartigem Charakter bzw. vliesartigem Charakter genutzt. Varianten derartiger Verfahren sind beschrieben in der DE 1 504 317 A1 sowie dem Patent US 3,965,229 A1. Bei den in den genannten Schriften beschriebenen Verfahren wird so gearbeitet, dass eine Folie aus einer schäumfähigen Polymermasse unter solchen Bedingungen schmelzextrudiert wird, dass ein Aufschäumen stattfindet, wobei die Schaumzellen entweder von Anfang an bereits im Extruderkopf oder beim anschließenden Recken aus der Schmelze aufgerissen werden. In der DE 1 504 317 wird zwar davon gesprochen, dass man das Aufreißen der Schaumzellen durch ein Recken erreichen kann, das monoaxial, biaxal oder in allen Richtungen erfolgen kann, das in der Anmeldung näher beschriebene Recken erfolgt jedoch in allen Fällen dadurch, dass eine durch eine kreisförmige Düse extrudierte schlauchförmige Schaumfolie durch den Gasinnendruck beim Abziehen aus der Schmelze gedehnt wird. Die nach dem beschriebenen Verfahren erhältlichen Folien mit offenen Zellen bzw. Perforationen werden dazu verwendet, ein Produkt von der Art eines textilen Flächengebildes zu erzeugen. Die Herstellung von Folien, die durch Mikrohohlräume opak gemacht werden, wird weder in der DE 1 504 317 A1 beschrieben, noch im US-Patent 3,965,229 A1.

Darüberhinaus weisen Folien, die im Schmelzezustand gereckt werden, wesentlich niedrigere mechanische Festigkeitswerte auf als Folien, die im verfestigten Zustand gereckt werden.

Aus der vorbekannten GB-A-1 323 879 ist ein Verfahren als bekannt zu entnehmen, bei dem eine ein Treibmittel enthaltende Schmelze eines thermoplastischen Polymers, genauer eines vinylaromatischen Polymers wie z.B. Polystyrol mit zähigkeitsverbessernden Zusätzen, durch die Ringdüse einer Blasextrusionsanlage extrudiert und aus dem schmelzflüssigen Zustand heraus durch Aufblasen ohne sofortige Zwischenabkühlung gereckt wird.

Bei der in der GB-A-1 323 879 beschriebenen Vorgehensweise eines Reckens aus der Schmelze wird keine biaxial verfestigte Folie erhalten, die mit einer nach dem erfindungsgemäßen Verfahren erhältlichen simultan biaxial gereckten Schaum-Flachfolie vergleichbar ist.

Es ist Aufgabe der vorliegenden Erfindung, ein neues Verfahren zur Herstellung geschäumter Folien aus einem thermoplastischen Polymer mit zweidimensional verbesserten mechanischen Eigenschaften herzustellen, die opak sind und bei denen die Opazität wenigstens überwiegend auf die Anwesenheit von geschlossenzelligen, durch Schäumen erzeugten Mikrohohlräumen zurückgeführt wird.

Diese Aufgabe wird durch ein Verfahren gemäß Patentanspruch 1 gelöst.

Vorteilhafte Ausgestaltungen sind den abhängigen Ansprüchen zu entnehmen.

Der vorliegenden Erfindung liegt die Erkenntnis zugrunde, dass es möglich ist, geschäumte biaxial orientierte opake Polymerfolien mit dem für Mikrohohlräume charakteristischen Perlglanz dann zu erzeugen, wenn man das Recken einer geschäumten und vor dem Recken durch Kühlen verfestigten Folie aus einem orientierbaren thermoplastischen Polymer als Simultanrecken auf einer Simultanreckanlage mit einem Spannrahmen für das Recken einer Flachfolie, gleichzeitig in Längs- und Querrichtung durchführt.

Bei dem Simultanrecken gleichzeitig in beiden Folienrichtungen wird vermieden, dass eine monoaxial gereckte Folie mit hoch oder zu hoch orientierten Molekularbereichen erzeugt wird, die bei der Weiterverarbeitung in einem Reckrahmen zum Spleißen neigt. Auch eine Verzerrung der Schaumzellen und ihr Aufreißen durch eine übermäßige Beanspruchung in einer Dimension wird in einem Ausmaß vermieden, wie das beim stufenweisen Recken nicht möglich ist. Die biaxial orientierte Folie wird dabei aus einer Schmelze hergestellt, die aus mindestens einer Flachdüse in eine Umgebung mit vermindertem Druck extrudiert wird.

Als besonders geeignet für das Recken einer aus einer Flachdüse extrudierten und verfestigten Schaumfolie haben sich Simultanreckanlagen mit einem Antrieb mittels synchroner Linearmotoren erwiesen, wie sie beispielsweise in dem Patent EP 0 318 484 B1 näher erläutert werden und von der Anmelderin hergestellt werden. Aufgrund des schonenden, gut steuerbaren Reckens simultan in beide Richtungen kann eine geschäumte Folie mit einem Flächenreckverhältnis von bis zu 100 gereckt werden, unter Bildung von festeren, ggf. sehr dünnen Folien.

Es können auf diese Weise opake geschäumte und biaxial orientierte Folien hergestellt werden, die - im Falle einer Verwendung von Polypropylen - eine Dichte im Bereich von 0,1 bis 0,9 g/cm³, vorzugsweise 0,3 bis 0,7 g/cm³, aufweisen und mit einer Dicke im Bereich von 5 µm bis 200 µm, vorzugsweise im Bereich von 5 bis 75 µm und besonders bevorzugt im Bereich von 25 bis 35 µm hergestellt werden können.

Das erfindungsgemäße Verfahren, mit dem erstmals eine Schaumfolie in Form einer Flachfolie biaxial gereckt werden kann, macht es auch möglich, diese biaxial gereckte Schaumfolie auf an sich bekannte Weise in den Verbund einer Mehrschichtfolie einzubinden, indem man sie in an sich bekannter Weise mit ungeschäumten Schichten verbindet, die z.B. koextrudiert, aufextrudiert oder aufkaschiert werden können. Derartige Mehrschichtfolien können von 2 bis 7 oder mehr Schichten aufweisen, wobei einige dieser Schichten auch zwischengelagerte Haftmittelschichten sein können.

Als thermoplastische Polymere für die erfindungsgemäße biaxial gereckte Schaumfolie kommen grundsätzlich alle durch Recken orientierbaren thermoplastischen Kunststoffe in Frage, z.B. Polyolefine in Form von Homopolymeren und Copolymeren z.B. des Ethylens, Propylens oder Butylens oder aus diesen hergestellten Polymerblends, aber auch z.B. Polystyrol, Polyester oder andere Materialien. Folien auf der Basis von Poly-olefinen sind derzeit bevorzugt, wobei ganz besonders Folien auf der Basis von Polypropylen, insbesondere von Polypropylen mit hohen Anteilen an isotaktischem Polypropylen, bevorzugt werden.

Der Schaum wird bevorzugt so erzeugt, dass bei der Folienherstellung durch Aufschäumen gleichmäßig verteilte Mikrohohlräume gebildet werden. Zu diesem Zweck wird vorzugsweise ein physikalisches Treibmittel in Form eines Gases wie Stickstoff, Kohlendioxid oder eines Alkans wie Butan oder Propan in einer solchen Menge unter Druck in eine Polymerschmelze hoher Schmelzenfestigkeit eingespeist und darin gelöst oder homogen fein verteilt, dass keine zu großen Gasblasen gebildet werden, die in der Flachdüse bei der Extrusion der Schmelze oder beim Recken in einem zu hohen Maße aufreißen.

Anstelle der Verwendung eines physikalischen Treibmittels können auch bekannte chemische Treibmittel, ggf. mit Aktivatoren, verwendet oder mitverwendet werden, wie sie beispielsweise in der DE 1 504 317 A1 auf den Seiten 6/7 aufgezählt werden. Grundsätzlich können im Rahmen der vorliegenden Erfindung beliebige physikalische oder chemische Treibmittel verwendet werden, vorausgesetzt, sie lassen sich ausreichend homogen in der Polymerschmelze verteilen und führen zu einer gleichmäßigen Schaumbildung eines überwiegend geschlossenzelligen Mikroschaums.

Bevorzugt wird das Verfahren als Verfahren unter Recken einer geschäumten Flachfolie auf einer Simultanreckanlage durchgeführt. Dabei werden neuartige geschäumte opake Folien erhalten, die auch dann durch ein auf diese Anmeldung erteiltes Patent geschützt sein sollen, wenn sie durch Herstellung nach einem anderen Verfahren kopiert werden. In diesem Zusammenhang ist insbesondere eine alternative Herstellung nach dem sogenannten "Double-Bubble-Verfahren" zu nennen, bei dem eine Schlauchfolie nach ihrer Abkühlung und Verfestigung unter neuerlichem Dehnen unter Gasdruck und Längszug weiter simultan gereckt wird.

Bei der bevorzugten Ausführungsform des erfindungsgemäßen Verfahrens wird die treibmittelhaltige Schmelze, die im Extruder unter einem vergleichsweise hohen Druck gehalten wird, durch eine Flachdüse in eine Umgebung mit vermindertem Druck, üblicherweise Atmosphärendruck, extrudiert, wobei das Treibmittel seine Wirkung entfaltet und es zu einem Aufschäumen der extrudierten Folie kommt. Diese wird durch Abkühlen verfestigt, beispielsweise auf an sich bekannte Weise durch Abkühlen mittels einer "Chillroll", und dann unter an sich bekannten Bedingungen für das Recken thermoplastischer Folien auf einer Simultanreckanlage simultan gereckt.

Auch wenn es bevorzugt ist, die Opazität ausschließlich durch Schäumen zu erreichen, liegt es im Bereich der Erfindung, ggf. kleinere Mengen an anorganischen festen Füllstoffen wie z.B. TiO₂ oder organischen Füllstoffen, die beim Recken zur zusätzlichen Bildung von Mikrohohlräuem nach dem o.g. bekannten Verfahren führen, zur Erzielung bestimmer spezieller Folieneigenschaften mitzuverwenden.

Es versteht sich für den Fachmann, dass die optimalen Betriebsbedingungen, und zwar sowohl was das optimale Treibmittel, seine optimale Menge sowie die optimalen Betriebsparameter der Reckanlage betrifft, durch Versuche ermittelt und festgelegt werden müssen.

Zur Verbesserung des Aussehens der Folien und um die Bedruckbarkeit zu optimieren, ist es besonders bevorzugt, solche Folien herzustellen, bei denen die geschäumte Schicht die Kernschicht einer Mehrschichtfolie bildet, die mit einer oder zwei ungeschäumten Folien verbunden ist. Zum Herstellen der Mehrschichtfolien können prinzipiell alle bekannten Verfahren (Koextrusionsverfahren, bei denen mehrere Schmelzeschichten gleichzeitig aus der Mehrschicht-Extrusionsdüse austreten, Verfahren der Extrusionsbeschichtung der fertigen Kernfolie oder Auflaminieren von Deckschichten) zur Anwendung kommen.

Es liegt ferner im Bereich der Einsatzmöglichkeiten der erfindungsgemäßen biaxial orientierten geschäumten Polymerfolie, auf diese ein Beschichtungsmaterial mit einem Walzencoater aufzutragen, so dass im Reckofen eine Trocknung oder Aushärtung des Materials stattfindet.

Nachfolgend wird die Erfindung anhand von Versuchsbeispielen und Figuren noch näher erläutert. Bei den in den Beispielen beschriebenen Folien handelt es sich selbstverständlich nur um Ausführungsbeispiele, die im Rahmen der vorliegenden Erfindung in beliebiger Art und Weise abgeändert bzw. modifiziert oder ergänzt werden können.

In den Figuren zeigen:
- Fig. 1a und 1b:: die Maschineneinstellungen während des Simultanreckens gemäß Beispiel 1, und zwar in Fig. 1a das Reckverhältnis, aufgetragen gegen die jeweilige Meßposition über die Länge der Reckanlage, und in Fig. 1b entsprechend die Ofentemperatur.
- Fig. 2a und 2b:: die Maschineneinstellungen während des Simultanreckens gemäß den Beispielen 2 sowie 3, dargestellt analog Fig.1.
- Fig. 3a und 3b:: die Maschineneinstellungen während des Simultanreckens gemäß Beispiel 4, dargestellt analog Fig.1.
- Fig. 4:: eine Mikrophotographie (50mal vergrößert mit Auflicht), die die Form der unter den Maschineneinstellungen von Beispiel 2 erhaltenen Schaumbläschen zeigt.
- Fig. 5:: eine Mikrophotographie (50mal vergrößert mit Auflicht), die die Form der unter den Maschineneinstellungen von Beispiel 3 erhaltenen Schaumbläschen zeigt.

In allen Beispielen wurden folgende Maschinenanordnungen und -einstellungen angewendet:

### Extruder:

Zur Durchführung der Versuche wurde ein Einschneckenextruder (Durchmesser 90 mm, L/D: 32) der Firma Bandera eingesetzt. Bei allen Versuchen war es vorteilhaft, dass der Schmelzedruck bis zum Austritt aus der Flachfoliendüse möglichst hoch gehalten wurde, um ein vorzeitiges Aufschäumen innerhalb der Schmelzeleitungen bzw. Extrusionswerkzeuge zu vermeiden. Sollten sich Schaumstrukturen innerhalb des Extruders bilden, so werden diese am Düsenaustritt wieder kollabieren. Aus diesem Grund ist eine genaue Überwachung der Extrusionstemperaturen wichtig, und Druckschwankungen in der Polymerschmelze müssen verhindert werden. Aus dem gleichen Grund wurde auch der Düsenspalt mit 1,7 mm relativ schmal und die Düsentemperatur mit ca. 190°C relativ niedrig eingestellt, so dass sich stromaufwärts der Düse hohe Drücke aufbauen konnten. Als Anhaltswert kann festgehalten werden, dass etwa ein Druck von mindestens 70 bar bis kurz vor dem Düsenaustritt aufrecht erhalten werden sollte.

### Kühlwalze:

Die geschäumte Schmelze wurde mit Hilfe eines sog. Luftmessers auf bekannte Weise auf die Kühlwalzenoberfläche gedrückt. Die Walze mit einem Durchmesser von 500 mm wurde von innen mit kaltem Wasser durchströmt, während die andere Cast-Film-Seite direkt beim Transport durch das Wasserbad gekühlt wurde. Auf diese Weise wurde eine ca. 25 cm breite Vorfolie hergestellt. Bei den Schaumfolien, die im Rahmen der Versuchsbeispiele produziert wurden, war an der Endfolie deutlich zu erkennen, dass die beiden Oberflächen ein etwas voneinander abweichendes Erscheinungsbild hatten. Dies ist durch die unterschiedlichen Abkühlbedingungen an der Kühlwalze und im Wasserbad zu erklären. Aus diesem Grund wurden die Glosswerte für beide Oberflächen A und B bestimmt. Sollte es für bestimmte Folien notwendig sein, dass exakt identische Oberflächen hergestellt werden müssen, so könnte man die Schmelze z. B. auf einem sog. 3-Walzen-Stock oder zwischen zwei umlaufenden (Stahl-)Bändern abkühlen und verfestigen lassen.

### Infrarotvorheizung:

Zum Zweck der Temperaturerhöhung der Folie wurde vor dem Festklemmen der Folienränder eine Vorwärmung des Cast Films durch Infrarotstrahler in einer separaten IR-Vorheizstation vorgenommen.

### Streckvorrichtung für das Simultanverfahren:

In den Versuchen wurde die Schaumfolie nach einem kontinuierlichen Simultanreckverfahren hergestellt. Die Folie wurde im Reckofen mit einem Transportsystem befördert, welches nach dem LISIM®-Verfahren arbeitete. Dabei werden die Folienränder von sog. Kluppen erfaßt. Jede dritte dieser Kluppen ist mit Permanentmagneten bestückt und dient gleichzeitig als Sekundärteil eines Linearmotorantriebes. Über nahezu den ganzen umlaufenden Transportweg sind parallel zur Führungsschiene die Primärteile des Linearmotorantriebes angeordnet. Die nicht-angetriebenen Kluppen dienen lediglich dazu, Folienkräfte quer zur Laufrichtung aufzunehmen und den Durchhang zwischen den Haltepunkten zu reduzieren.

Nachdem die Folienränder von den Kluppen erfaßt sind, durchläuft die Vorfolie, auch Cast Film genannt, eine Vorheizzone in der die Führungsschienen der Kluppen im wesentlichen parallel verlaufen. In diesem Bereich des Reckofens wird der Cast Film durch eine Konvektionsheizung vom Niveau der Einlauftemperatur auf die Recktemperatur erwärmt. Danach beginnt der Simultanreckprozeß, indem die voneinander unabhängigen Kluppenwagen in Folienrichtung beschleunigt werden und somit separieren. Auf diese Weise wird die Folie in die Länge gestreckt. Gleichzeitig wird diesem Prozeß eine Querstreckung überlagert und zwar dadurch, dass die Führungsschienen im Bereich der Kluppenbeschleunigung divergieren.

Danach kann der Film gemäß den gewünschten Folieneigenschaften auf unterschiedlichste Weise behandelt werden. Soll das Endprodukt eine möglichst dimensionsstabile Folie sein, so wird man versuchen eine Heat-Set-Behandlung bei erhöhter Temperatur vorzunehmen und unter Umständen die Folie in Längs- oder Querrichtung kontrolliert im eingespannten Zustand geringfügig zu relaxieren. Besonders vorteilhaft kann das simultane Relaxieren in Längs- und Querrichtung sein. Hier werden die Kluppenwagen verzögert, wodurch sich deren Abstand zueinander reduziert. Gleichzeitig lässt man die Führungsschienen des Transportsystems leicht konvergieren.

Es kann aber auch ein hoher Schrumpf des Endproduktes erwünscht sein, z.B. für die Etikettierung von Hohlkörpern, wie Flaschen, Dosen, etc.. In diesem Fall sind häufig Folien notwendig, die bei Erwärmung in Längsrichtung stark schrumpfen, in Querrichtung aber weitgehend dimensionsstabil sind bzw. geringes Schrumpfvermögen aufweisen, um den Anforderungen des sog. "Roll On Shrink On" Verfahrens bei der Etikettierung zu genügen. Bei der Herstellung dieser Art von Folien wird nach dem Simultanstreckprozeß nochmals in Längsrichtung nachgereckt. Somit kann das oben erwähnte Schrumpfverhalten erreicht werden. Außerdem wird auch die mechanische Festigkeit dieser Folien in Maschinenrichtung erhöht.

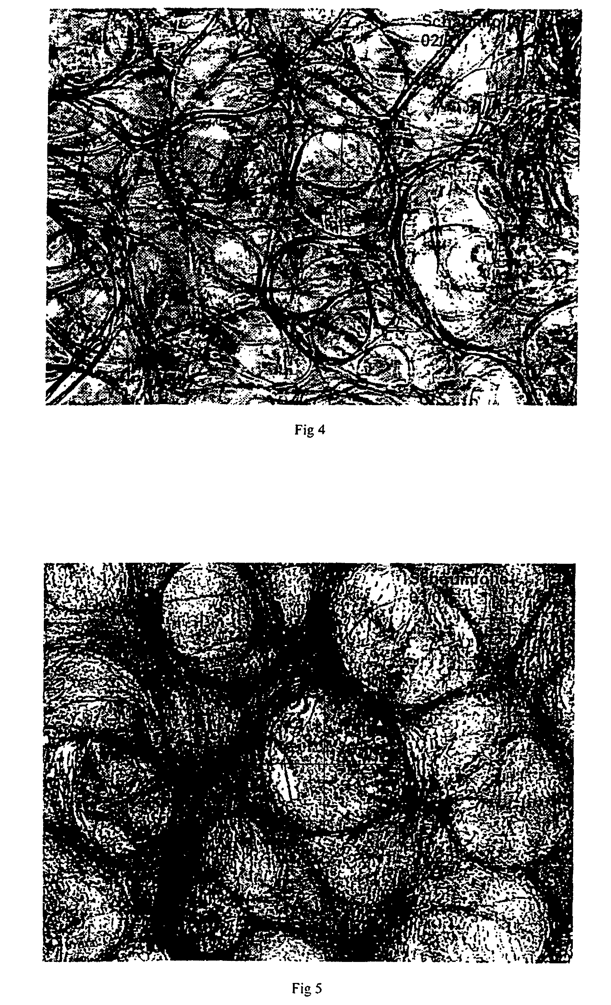

Darüber hinaus sind speziell mit Linearmotor-getriebenen Anlagen unterschiedlichste Streck- bzw. Relaxierprofile denkbar, wie z. B. ein stufenweiser Simultanstreckprozeß. Auf diese Weise können Schaumfolien mit verschiedensten Eigenschaften, wie Festigkeit und Schrumpfverhalten erzeugt werden. Besonders interessant ist, dass die Form der eingeschlossenen Luftblasen direkt durch das Reckverhältnis einstellbar ist. Auf diese Weise können das Erscheinungsbild und die Eigenschaften der Schaumfolie auf einer Linearmotor-getriebenen Simultanreckanlage einfach reguliert werden. Die Schaumfolie gemäß Beispiel 3 zeigte ein besonders ansprechendes Erscheinungsbild, weil hier die Blasen sehr gleichmäßig und fein verteilt vorliegen. In der dazugehörigen Figur 5 sieht man, dass die Blasen in einer relativ homogenen Kunststoffmatrix eingebettet sind. Im Vergleich dazu weist die Folie, die im Beispiel 2 hergestellt wurde (Figur 4) wesentlich mehr faserartige Anteile auf.

Nach dem Ofen wurde die Folie durch ein Kühlfeld transportiert, um dann von den Kluppen frei gegeben zu werden.

Die Versuchsanlage, auf die sich die Beispiele beziehen, hatte eine Arbeitsbreite von ca. 120 cm am Auslauf des Ofens.

### Abzugsständer und Wickler:

Im anschließenden Anlagenteil, dem Abzugsständer, wurde der Folienrand gesäumt und der Nettofilm über mehrere, zum Teil temperierbare, Walzen in Richtung Wickler weiter transportiert. Wahlweise wurde zur Beeinflussung der Grenzflächenspannung, z.B. zur Verbesserung der Bedruckbarkeit der Folie, eine Corona- bzw. Flammbehandlung vorgenommen. Zuletzt wurde die biaxial gereckte Schaumfolie im Spalt- oder Kontaktwickelverfahren kontinuierlich auf die Wickelhülsen des Wendewicklers aufgewickelt.

### Beispiel 1:

Im Extruder wurden folgende Rohstoffe verarbeitet:
KF6190 H, Hersteller Firma Montell (PP-Homopolymer mit verengter Molekulargewichtsverteilung)
CT455 , Hersteller Firma Clariant (Schäumungsmittel bestehend u. a. aus Natriumhydrogencarbonat und Mononatriumcitrat).

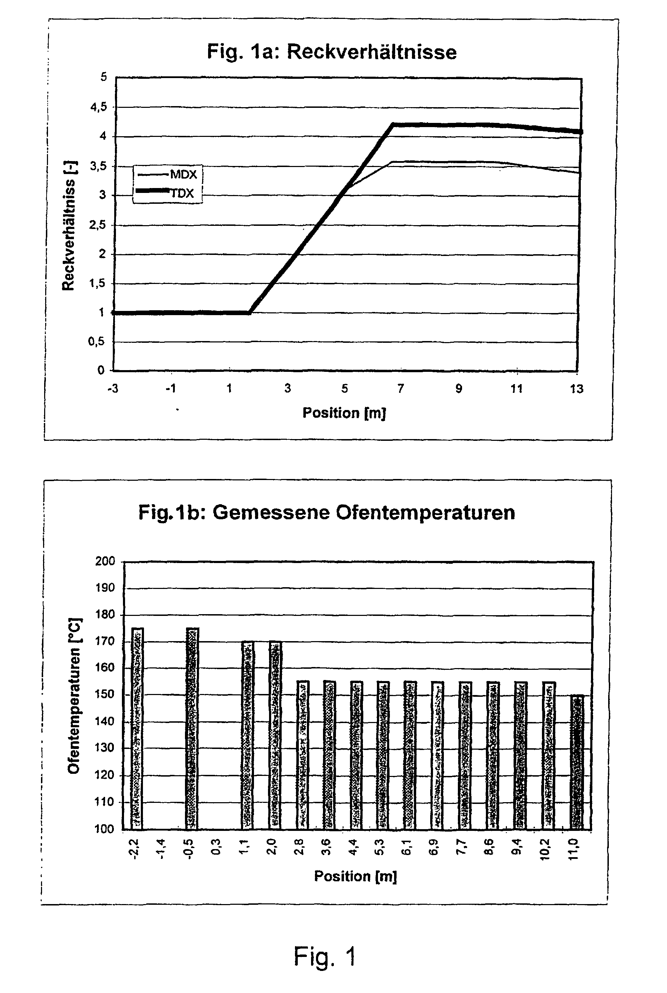

Es wurden 98% Gew. KF6190 H und 2% Gew. CT455 in den Extruder eingespeist. Die Temperatur der Schmelze wurde im Extruder und in der Schmelzeleitung auf 240 bis 250 °C gehalten. Die aus der Breitschlitzdüse austretende Schmelzefahne aus geschäumtem PP wurde mit 7 m/min von der Kühlwalze abgezogen. In Fig. 1 sind die Einstellungen des Reckofens (Temperaturprofil und Reckprofile) dargestellt. Zu beachten ist, dass die tatsächlichen Lufttemperaturen an der Folienoberfläche, aufgrund der Einbaulage der Meßfühler, etwas unter den angegebenen Ofentemperaturen liegen (dies betrifft alle Beispiele). Aus diesem Grund, und wegen der Gesetzmäßigkeiten der instationären Wärmeübertragung, ist die Temperatur der Folie beim Recken etwas niedriger als 155°C. Die Zahlen für die Reckverhältnisse in den Figuren 1 bis 3 beziehen sich auf die an der Maschine eingestellten Reckverhältnisse. Die auf die Folie bezogenen Reckverhältnisse weichen in der Regel von diesen Werten ab. Insbesondere das Querreckverhältnis liefert auf die Netto-Folie bezogen höhere Zahlenwerte als das der Fall ist, wenn man von der Maschineneinstellung ausgeht. Der Grund hierfür liegt darin, dass beim Streckprozeß die Folienränder dicker bleiben als die Folienmitte und deshalb der relevante Mittenbereich eine höhere Streckung erfährt. Gerade bei der geringen Arbeitsbreite einer Versuchsanlage ist dieser Effekt nicht vernachlässigbar. Die Kluppentemperatur vor dem Greifen der Folie betrug 100 bis 120°C. Nach dem gleichzeitigen Längs- und Querreckprozeß wurde die ca. 70 cm breite Folie (nach dem Randbeschnitt) mit ca. 28 m/min aufgewickelt. Es zeigte sich, dass das geschäumte Produkt stabil auf der Simultanreckmaschine herstellbar ist. Die Eigenschaften der so produzierten Folie sind in der Tabelle 1 zusammengefaßt.

### Beispiel 2:

Zu den Rohstoffen des Versuchsbeispiels 1 wurde zusätzlich noch ein Anteil eines PP-Spezialprodukts Profax PF814 (Hersteller Montell) beigemischt. Dieser Polypropylentyp weist Seitenketten auf, welche zur Schaumstabilisierung durch Erhöhung der Schmelzestabilität des PP führen.

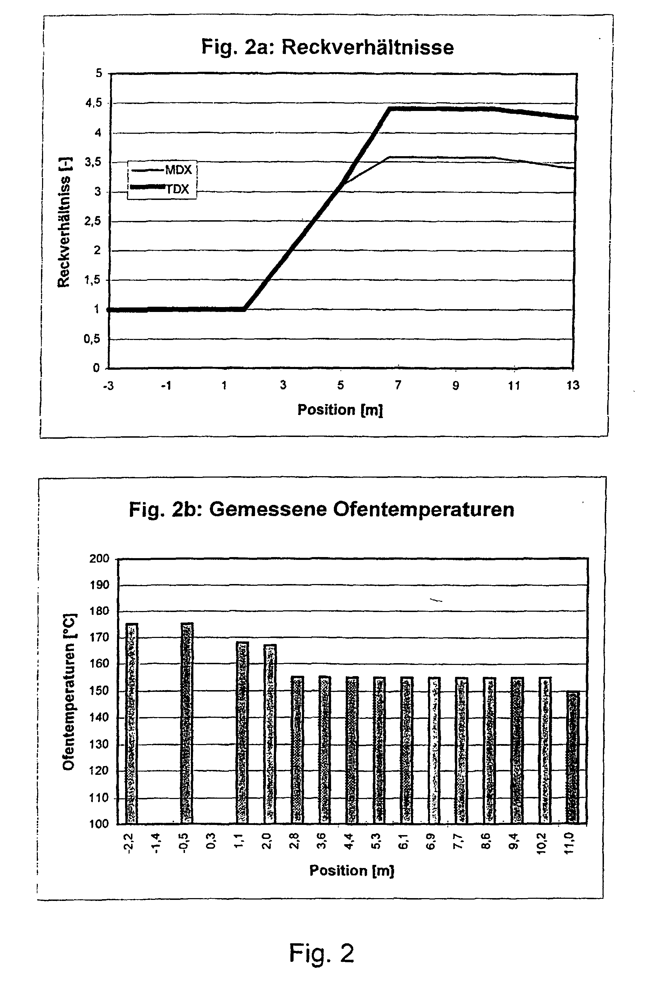

Das Polymergemisch (88% Gew. KF6190 H, 10% Gew. Profax PF814, 2% Gew. CT455) wurde bei ähnlichen Temperaturen wie Beispiel 1 (ca. 240°C) im Extruder und in den Schmelzeleitungen verarbeitet. Die übrigen Einstellungen entsprechen weitgehend dem Beispiel 1. In Fig 2 sind die Reckparameter dargestellt.

### Beispiel 3

Es wurde in diesem Beispiel 2% Gew. CT455 zu 98 % Gew. EPT30R, der Firma Montell zugegeben. Dieses Produkt besteht aus einem heterophasigen PP-Blockpolymer mit etwa 10% Ethylenkautschukanteil. Der Kautschukanteil im Copolymer fördert die Schaumbildung, und da sich hier das Schäumungsmittel besser löst, entstehen feine Schäume. Amorphe Polymere sind generell aufgrund eines breiteren Verarbeitungsfensters besser verschäumbar als kristalline Polymere. Die Maschineneinstellungen wurden gegenüber Beispiel 2 kaum verändert. Die Reckbedingungen sind in Fig 2 gezeigt, und die resultierenden Folienwerte sind in der Tabelle 1 zusammengestellt.

### Beispiel 4

In diesem Beispiel wurde im Gegensatz zu den vorherigen Ausführungsbeispielen eine Folie produziert, die Pigmente enthält. Als zusätzliche Komponente wurde deshalb das Masterbatch PF 97 der Firma Schulmann verwendet. Dieses Produkt enthält ca. 70% CaCO₃ und wird in der Regel für die Herstellung von "pearlized" Folien verwendet, weshalb die Haftfähigkeit der Partikel in der PP-Matrix reduziert ist.

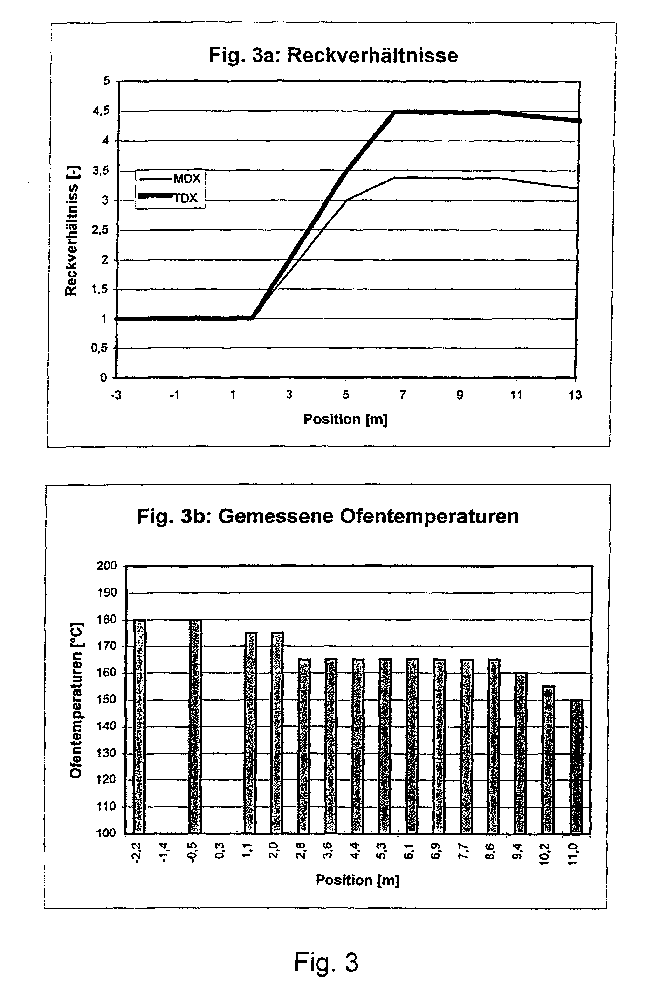

In diesem Beispiel wurden 77,5% Gew. KF6190 H, 20% Gew PF 97 und 2,5% Gew. CT455 verwendet. Bei der Extrusion und in den Leitungen wurden Temperaturen für die Schmelze von ca. 225 bis 245°C eingestellt. Die Temperatur der Breitschlitzdüse lag bei ungefähr 180°C. In Fig. 3 sind die Reckprofile sowie die Ofenlufttemperaturen gezeigt. Wie bei allen Beispielen gilt auch hier, dass die Folientemperatur im Rahmen der im Beispiel 1 beschriebenen Ungenauigkeiten von der Ofentemperatur abweicht.

Die nachfolgenden Tabelle 1 faßt die Eigenschaften der Folien, die gemäß den Ausführungsbeispielen 1 bis 4 (Bsp. 1 bis Bsp.4) hergestellt wurden, tabellarisch zusammen.

In der Tabelle bedeuten:
MD = Machine Direction;
TD = Transverse Direction;
* bestimmt nach der OPMA.Methode

**Tabelle 1**

| Eigenschaft | | Einheit | Bsp. 1 | Bsp. 2 | Bsp. 3 | Bsp. 4 | Meßmethode |
|---|---|---|---|---|---|---|---|
| Dicke | | µm | 77 | 88 | 68 | 202 | DIN 53370 |
| Reißfestigkeit | MD | N/mm² | 26 | 31 | 28 | 5,8 | ASTM 882 |
| | TD | N/mm² | 38 | 41 | 47 | 13 | ASTM 882 |
| Reißdehnung | MD | % | 21 | 24 | 23 | 14 | ASTM 882 |
| | TD | % | 12 | 12 | 11 | 8 | ASTM 882 |
| E-Modul | MD | N/mm² | 674 | 711 | 516 | 167 | ASTM 882 |
| | TD | N/mm² | 1037 | 993 | 969 | 303 | ASTM 882 |
| Gloss | A | - | 111 | 105 | 49 | 25 | ASTM 2457 |
| | B | | 114 | 106 | 52 | 33 | ASTM 2457 |
| Thermischer Schrumpf | MD | % | 2,6 | 3,3 | 4,3 | 2 | 5 min 120°C |
| | TD | % | 2,8 | 3,1 | 4,34 | 0,46 | 5 min 120°C |
| | MD | % | 4,12 | 5,02 | 6,86 | 2,4 | 5 min 130°C * |
| | TD | % | 4,64 | 5,32 | 6,66 | 1,1 | 5 min 130°C * |
| Opazität | | % | 45 | 69 | 68 | 65 | DIN 53146 |
| Dichte Cast Film | | g/cm³ | - | 0,77 | 0,724 | - | DIN 53420 |
| Dichte End-film | | g/cm³ | 0,4 | 0,39 | 0,49 | 0,21 | DIN 53420 |

Die Eigenschaften dieser neuartigen Folien beweisen, dass nach dem erfindungsgemäßen Verfahren geschäumte Folien mit interessanten, neuen Eigenschaften für eine fast unüberschaubare Vielfalt von Anwendungen geschaffen werden können. So zeigt die Folie z. B. ein Reißverhalten, das dem von Papier gleicht. Auffallend sind in diesem Zusammenhang die fasrigen Rißkanten, sowie das Phänomen, dass man problemlos kreisrunde Folienstücke abreißen kann. Normalerweise haben biaxial gereckte Folien die Neigung, beim Reißen lineare, sich in einer Hauptrichtung fortpflanzende Rißkanten zu bilden.

Auffallend ist auch, dass es möglich ist, hervorragende optische Eigenschaften zu erzielen. Aus diesem Grund kann diese Folie die bisher bekannten opaken Folien auf kostengünstige Weise ersetzen.

Darüber hinaus lassen sich durch geeignete Wahl der Verarbeitungsbedingungen, insbesondere der Reckverhältnisse, interessante Oberflächenstrukturen der Folien erzielen. Diese Folien können für dekorative Anwendungen verwendet werden. Dabei können dem Rohstoff auch geeignete Einfärbemittel zugegeben und/oder eine entsprechende Beschichtung, z. B. Metallisierung, der Folien vorgenommen werden.

Nicht gemessen wurde in den o.g. Versuchen die thermische Leitfähigkeit der Folie. Aufgrund seiner niedrigen Dichte, d.h. des hohen Luftanteils, kann aber mit Sicherheit vorausgesagt werden, dass das Produkt eine extrem niedrige Wärme- und Temperaturleitfähigkeit aufweisen muss. Diese Eigenschaft ist besonders für Folien interessant, die isolierende Wirkung haben sollen. Zur weiteren Erhöhung des Widerstands gegen eine Wärmeübertragung kann auch hier eine Metallisierung der Folie vorgenommen werden, um den Anteil der Wärmestrahlung zu minimieren.

Die erfindungsgemäßen Folien können ferner mit Vorteil auch für Anwendungen eingesetzt werden, bei denen eine Schall- und/oder Vibrationsdämpfung erwünscht ist.

## Patentansprüche

1. Verfahren zur Herstellung einer biaxial orientierten opaken Folie aus einem geschäumten orientierbaren thermoplastischen Polymer,
bei welchem eine Schmelze des thermoplastischen Polymers, die ein Gas oder eine niedrigsiedende Flüssigkeit und/oder ein chemisches Treibmitttel in gelöster oder fein dispergierter Form enthält, aus mindestens einer Flachdüse in eine Umgebung mit vermindertem Druck extrudiert, im Kontakt mit einer Kühlwalze durch Abkühlen zu einer Folie verfestigt und die erhaltene Folie auf dem Spannrahmen einer Simultanreckanlage durch Recken gleichzeitig in Längs- und Querrichtung orientiert wird.

2. Verfahren nach Anspruch 1, **dadurch gekennzeichnet, dass** das thermoplastische Polymer ein Polyolefin ist, das ausgewählt ist aus orientierbaren Homo- und Copolymeren des Propylens, des Ethylens sowie der isomeren Butylene sowie aus Polymerblends aus den genannten Homo- und Copolymeren.

3. Verfahren nach Anspruch 1 oder 2, **dadurch gekennzeichnet, dass** die Simultanreckanlage mit synchronen Linearmotoren angetrieben wird.

4. Verfahren nach einem der Ansprüche 1 bis 3, dadruch gekennzeichnet, dass beim Recken ein Flächenreckverhältnis von 100 oder weniger eingehalten wird.

5. Verfahren nach einem der Ansprüche 1 bis 4, **dadurch gekennzeichnet, dass** die opake geschäumte Folie während ihrer Herstellung oder im Anschluss daran mit wenigstens einer ungeschäumten Deckschicht zu einer Mehrschichtfolie verbunden wird.

6. Verfahren nach Anspruch 5, **dadurch gekennzeichnet, dass** die opake geschäumte Folie die Kernschicht einer bedruckbaren Mehrschichtfolie bildet und beidseitig mit ungeschäumten coextrudierten, extrusionsbeschichteten und/oder laminierten Deckschichten sowie ggf. zusätzlichen zwischengelagerten Haftmittelschichten versehen wird.

7. Verfahren nach einem der Ansprüche 1 bis 6, **dadurch gekennzeichnet, dass** die Schaumzellen der opaken geschäumten Folie zu einem überwiegenden Anteil von geschlossenzelligen Mikrohohlräumen gebildet werden, die in die kontinuierliche Matrix der orientierten Folie aus dem thermoplastischen Polymer eingelagert sind.

8. Verfahren nach Anspruch 1, **dadurch gekennzeichnet, dass** zur Herstellung der geschäumten Folie ein Füllstoff- und Kavitationsmittel-freies thermoplastisches Polymer verwendet wird.

9. Biaxial gereckte geschäumte opake Folie aus einem thermoplastischen Polymer, erhältlich durch ein Verfahren nach einem der Ansprüche 1 bis 8.

10. Opake Folie nach Anspruch 9, **dadurch gekennzeichnet, dass** sie eine Dichte im Bereich von 0,1 bis 0,9 g/cm³, vorzugsweise im Bereich von 0,3 bis 0,75 g/cm³, sowie eine Dicke im Bereich von 5 bis 200 µm, vorzugsweise im Bereich von 5 bis 60 µm, aufweist.

## Claims

1. Process for producing a biaxially oriented film made from a foamed orientable thermoplastic polymer, **characterized in that** a melt of the thermoplastic polymer comprising a gas or low-boiling liquid and/or chemical blowing agent in dissolved or finely dispersed form is extruded from at least one flat-film die into an environment with a lower pressure, is solidified by cooling in contact with a chill roll to give a film, and the resultant film is oriented by stretching, longitudinally and at the same time transversely, on the stretching frame of a simultaneous stretching system.

2. Process according to Claim 1, **characterized in that** the thermoplastic polymer is a polyolefin selected from orientable homo- and copolymers of propylene, of ethylene, or else of the isomers of butylene, or else from polymer blends made from the homo- and copolymers mentioned.

3. Process according to any of Claims 1 and 2, **characterized in that** the simultaneous stretching system is chosen by synchronous linear motors.

4. Process according to any of Claims 1 to 3, **characterized in that** the area stretching ratio maintained during the stretching is 100 or below.

5. Process according to any of Claims 1 to 4, **characterized in that** during the production of the opaque foamed film or following its production it is bonded to a composite film, using at least one unfoamed outer layer.

6. Process according to Claim 5, **characterized in that** the opaque foamed film forms the core layer of a printable composite film and is provided on both sides with unfoamed coextruded, extrusion-coated and/or laminated outer layers and also, where appropriate, with additional intercalated adhesion-promoter layers.

7. Process according to any of Claims 1 to 6, **characterized in that** most of the foam cells of the opaque foamed film are closed-cell microcavities embedded into the continuous matrix of the oriented film made from the thermoplastic polymer.

8. Process according to Claim 1, **characterized in that** in producing the foamed film use is made of a thermoplastic polymer which is free from fillers and cavity-formers.

9. Biaxially stretched foamed opaque film made from a thermoplastic polymer, obtainable according to any of Claims 1 to 8.

10. Opaque film according to Claim 9, **characterized in that** it has a density in the range from 0.1 to 0.9 g/cm³, preferably in the range from 0.3 to 0.75 g/cm³, and also a thickness in the range from 5 to 200 µm, preferably in the range from 5 to 60 µm.

## Revendications

1. Procédé de production d'un film opaque à orientation biaxiale constitué d'un polymère thermoplastique orientable moussé,
dans lequel on fait extruder le polymère thermoplastique en fusion, contenant un gaz ou un liquide à bas point d'ébullition et/ou un agent moussant chimique sous forme dissoute ou finement dispersée, hors d'au moins une filière plate jusque dans un environnement à pression réduite, on le fait solidifier par refroidissement en contact avec un tambour de refroidissement pour former un film, et on oriente le film obtenu par étirage simultanément en direction longitudinale et transversale sur le cadre de tensionnement d'une installation d'étirage simultané.

2. Procédé selon la revendication 1, **caractérisé en ce que** le polymère thermoplastique est une polyoléfine qui est choisie parmi le groupe des homopolymères et des copolymères orientables du propylène, de l'éthylène ainsi que du butylène isomère, ainsi que des mélanges de polymères parmi les homopolymères et copolymères cités.

3. Procédé selon l'une ou l'autre des revendications 1 et 2, **caractérisé en ce que** l'installation d'étirage simultané est entraînée par des moteurs linéaires synchrones.

4. Procédé selon l'une des revendications 1 à 3, **caractérisé en ce que** lors de l'étirage, on maintient une relation d'étirage surfacique de 100 ou moins.

5. Procédé selon l'une des revendications 1 à 4, **caractérisé en ce que** pendant la réalisation du film opaque moussé et à la suite de celle-ci, on le relie avec au moins une couche de couverture non moussée pour former un film à couches multiples.

6. Procédé selon la revendication 5, **caractérisé en ce que** le film opaque moussé forme la couche de coeur d'un film à couches multiples susceptible d'être pourvu d'une impression, et est pourvu des deux côtés de couches de couverture non moussées, coextrudées, revêtues par extrusion et/ou stratifiées ainsi que le cas échéant d'autres couches adhésives intermédiaires supplémentaires.

7. Procédé selon l'une des revendications 1 à 6, **caractérisé en ce que** les alvéoles de mousse du film opaque moussé sont formées en majeure partie par des micro-cavités à alvéoles fermées qui sont noyées dans la matrice continue du film orienté en polymère thermoplastique.

8. Procédé selon la revendication 1, **caractérisé en ce que** pour réaliser le film moussé, on utilise un polymère thermoplastique exempt de matière de remplissage et d'agent de cavitation.

9. Film opaque moussé étiré biaxialement en polymère thermoplastique, susceptible d'être obtenu par un procédé selon l'une des revendications 1 à 8.

10. Film opaque selon la revendication 9, **caractérisé en ce qu'**il présente une densité dans la plage de 0,1 à 0,9 g/cm³, de préférence dans la plage de 0,3 à 0,75 g/cm³, ainsi qu'une épaisseur dans la plage de 5 à 200 µm, de préférence dans la plage de 5 à 60 µm.
